# EUROPEAN PATENT APPLICATION

(11) **EP 4 683 166 A1**
(43) Date of publication of application: **21.01.2026**
(21) Application number: 25190311.8
(22) Date of filing: 17.07.2025
(51) Int. Cl.: H02J 7/00, H01M 10/625, B60L 53/53, B60L 53/62, B60L 53/302

(54) **TEMPERATURE CONTROL METHOD, PROGRAM PRODUCT, DEVICE, AND STORAGE MEDIUM FOR ENERGY STORAGE SUPERCHARGING EQUIPMENT**

(30) Priority: 18.07.2024 CN 202410965532
(71) Applicant: Shanghai Sunnic New Energy Technology Co., Ltd, Shanghai 200082 (CN)
(72) Inventor: Zhang, Xu, Shanghai, 200082 (CN); Kong, Jian, Shanghai, 200082 (CN); Wang, Minghui, Shanghai, 200082 (CN); Hu, Jiangwen, Shanghai, 200082 (CN); Ma, Wei, Shanghai, 200082 (CN); Liu, Xintian, Shanghai, 200082 (CN)
(74) Representative: KLIMENT & HENHAPEL

(57) **Abstract**

The present application provides a temperature control method for an energy storage supercharging equipment, which is applied to a thermal management system. The thermal management system is respectively connected with an energy storage battery, a bidirectional ACDC, a DCDC, and a liquid-cooling charging cable in the energy storage supercharging equipment. The method includes, according to operating states of the energy storage supercharging equipment, determining a to-be-monitored object and obtaining temperature parameters thereof, in which the to-be-monitored object includes at least one of the energy storage battery, the bidirectional ACDC, the DCDC, and the liquid-cooling charging cable; and according to the temperature parameters, controlling the temperature of the to-be-monitored object. According to the operating state of energy storage supercharging equipment, temperature control can be carried out for the energy storage battery, bidirectional ACDC, DCDC, and liquid-cooling charging cable in a unified manner, so as to reduce overall cost and improve temperature control efficiency.

## Description

### Technical Field

The present application relates to the field of batteries, and more specifically, to a temperature control method, a program product, a device, and a storage medium for an energy storage supercharging equipment.

### Background Art

With the development of the new energy industry, the performance requirements for energy storage supercharging equipment are getting higher and higher. In order to meet the performance requirements of energy storage supercharging equipment, a liquid-cooling temperature control solution is required. In most cases, the temperature control system is a split product. For each module in the energy storage supercharging equipment, such as the energy storage battery, charging module, and liquid-cooling charging cable, a separate thermal management system is configured for temperature control, resulting in high temperature control costs and low temperature control efficiency.

### Summary

The objective of the embodiments of the present application is to provide a temperature control method, a program product, a device, and a storage medium for an energy storage supercharging equipment, so as to realize temperature control of multiple to-be-monitored objects (or modules) of the energy storage supercharging equipment, reduce costs, and improve temperature control efficiency.

In a first aspect, an embodiment of the present application provides a temperature control method for an energy storage supercharging equipment, which is applied to a thermal management system. The thermal management system is respectively connected with an energy storage battery, a bidirectional ACDC (bidirectional AC/DC converter, which is a power electronic device that can convert alternating current into direct current, and can also invert direct current into alternating current), a DCDC (direct current to direct current converter), and a liquid-cooling charging cable in the energy storage supercharging equipment. The method includes, according to operating states of the energy storage supercharging equipment, determining a to-be-monitored object and obtaining temperature parameters thereof, in which the to-be-monitored object includes at least one of the energy storage battery, the bidirectional ACDC, the DCDC, and the liquid-cooling charging cable; and according to the temperature parameters, controlling the temperature of the to-be-monitored object.

In the implementation of the preceding embodiment, the temperature control method of the energy storage supercharging equipment is applied to the thermal management system. The thermal management system is respectively connected with the energy storage battery, the bidirectional ACDC, the DCDC, and the liquid-cooling charging cable in the energy storage supercharging equipment. According to operating states of the energy storage supercharging equipment, the to-be-monitored object is determined. The to-be-monitored object can be understood as an object that needs temperature control. The temperature of the energy storage battery, the bidirectional ACDC, the DCDC, and the liquid-cooling charging cable can be collectively controlled, thereby reducing the cost of the whole equipment and improving the temperature control efficiency.

Optionally, in an embodiment of the present application, if the operating state is a static state, the temperature parameters of the to-be-monitored object include the temperature of the energy storage battery cell. According to the temperature parameters, the temperature of the to-be-monitored object is controlled, including: if the temperature of the energy storage battery cell is less than or equal to a preset heating start temperature, issuing a first heating control instruction to heat the energy storage battery until the temperature of the energy storage battery cell is greater than the heating start temperature, and issuing a heating stop instruction, in which the heating temperature in the first heating control instruction is greater than the heating start temperature; if the temperature of the energy storage battery cell is greater than or equal to a preset cooling start temperature, issuing a first cooling control instruction to perform a cooling operation on the energy storage battery until the temperature of the energy storage battery cell is less than the cooling start temperature, and issuing a cooling stop instruction, in which the cooling water temperature in the first cooling control instruction is less than the cooling start temperature.

In the implementation of the preceding embodiment: by real-time monitoring of the temperature of the energy storage battery cell, after comparing the temperature of the energy storage battery cell with the preset cooling start temperature and heating start temperature, the temperature of the energy storage battery is controlled by the thermal management system to ensure that the battery operates within an optimal operating temperature range, thereby improving the performance and service life of the energy storage battery device.

Optionally, in an embodiment of the present application, if the operating state is a grid charging state, the temperature parameters of the to-be-monitored object include the temperature of the energy storage battery cell and the bidirectional ACDC temperature parameter; according to the temperature parameters, the temperature of the to-be-monitored object is controlled, including: if the temperature of the energy storage battery cell is less than or equal to a preset heating start temperature, issuing a second heating control instruction to heat the energy storage battery according to the bidirectional ACDC temperature parameter, in which the heating temperature in the second heating control instruction is greater than the heating start temperature and less than the maximum operating temperature of the bidirectional ACDC; if the temperature of the energy storage battery cell is greater than or equal to a preset cooling start temperature, issuing a second cooling control instruction to perform a cooling operation on the energy storage battery and the bidirectional ACDC until the temperature of the energy storage battery cell is less than the cooling start temperature, and issuing a cooling stop instruction, in which the cooling water temperature in the second cooling control instruction is less than the cooling start temperature and the maximum operating temperature of the bidirectional ACDC.

In the implementation of the preceding embodiment: when in the grid charging state, the temperature of the energy storage battery and the bidirectional ACDC can be controlled at the same time, which reduces resource waste of a single control assembly of multiple components and improves low temperature control efficiency thereof, and improves the efficiency and convenience of temperature control.

Optionally, in an embodiment of the present application, the bidirectional ACDC temperature parameter includes a bidirectional ACDC operating temperature. Heating the energy storage battery according to the bidirectional ACDC temperature parameter includes obtaining a heating demand of the energy storage battery cell according to the temperature of the energy storage battery cell, obtaining the heat generated by the bidirectional ACDC according to the bidirectional ACDC temperature parameter; if the heating demand of the energy storage battery cell is greater than the heat generated by the bidirectional ACDC, and the bidirectional ACDC operating temperature is less than the preset maximum allowable temperature of the bidirectional ACDC, using the heat generated by the bidirectional ACDC and the heat of a heater to heat the energy storage battery until the heating demand of the energy storage battery cell is not greater than the heat generated by the bidirectional ACDC; issuing a heater stop instruction, and then heating the energy storage battery with the heat generated by the bidirectional ACDC; if the heating demand of the energy storage battery cell is not greater than the heat generated by the bidirectional ACDC, and the bidirectional ACDC operating temperature is less than the preset maximum allowable temperature of the bidirectional ACDC, using the heat generated by the bidirectional ACDC to heat the energy storage battery until the temperature of the energy storage battery cell is greater than an heating start temperature, issuing a heating stop instruction, and performing a heat dissipation operation on the bidirectional ACDC.

In the implementation of the preceding embodiment: if the energy storage battery cell needs to be heated, and if the heating demand of the energy storage battery cell is greater than the heat generated by the bidirectional ACDC, then the heat generated by the bidirectional ACDC and the heat of the heater can be used to provide heat to the energy storage battery to heat the energy storage battery cell; the heat generated by the bidirectional ACDC can be reasonably utilized to improve the overall energy conversion efficiency of the energy storage supercharging equipment.

Optionally, in an embodiment of the present application, if the operating state is a discharging state, the temperature parameters of the to-be-monitored object include the temperature of the energy storage battery cell, the DCDC temperature parameter and the liquid-cooling charging cable temperature parameter; according to the temperature parameters, the temperature of the to-be-monitored object is controlled, including: if the temperature of the energy storage battery cell is less than or equal to a preset heating start temperature, issuing a third heating control instruction to heat the energy storage battery according to the DCDC temperature parameter and the liquid-cooling charging cable temperature parameter, in which the heating temperature in the third heating control instruction is greater than the heating start temperature and less than the preset maximum operating temperature of the DCDC and the preset maximum operating temperature of the liquid-cooling charging cable; if the temperature of the energy storage battery cell is greater than or equal to a preset cooling start temperature, issuing a third cooling control instruction to perform cooling operations on the energy storage battery, the DCDC and the liquid-cooling charging cable until the temperature of the energy storage battery cell is less than the cooling start temperature, and issuing a cooling stop instruction, in which the cooling water temperature in the third cooling control instruction is less than the cooling start temperature, the maximum operating temperature of the DCDC, and the maximum operating temperature of the liquid-cooling charging cable.

In the implementation of the preceding embodiment: in the discharging state, the temperature of the energy storage battery, the DCDC and the liquid-cooling charging cable can be controlled at the same time, so that the efficiency and convenience of temperature control are improved and the energy conversion efficiency is improved.

Optionally, in an embodiment of the present application, the DCDC temperature parameter includes the DCDC operating temperature; and the liquid-cooling charging cable temperature parameter includes the operating temperature of the liquid-cooling charging cable. Heating the energy storage battery according to the DCDC temperature parameter and the liquid-cooling charging cable temperature parameter includes: obtaining a heating demand of the energy storage battery cell according to the temperature of the energy storage battery cell, obtaining the heat generated by the DCDC according to the DCDC temperature parameter, and obtaining the heat generated by the liquid-cooling charging cable according to the liquid-cooling charging cable temperature parameter; if the heating demand of the energy storage battery cell is greater than the total heat generated by the DCDC and the liquid-cooling charging cable, the DCDC operating temperature is less than the preset maximum allowable temperature of the DCDC, and the operating temperature of the liquid-cooling charging cable is less than the preset maximum allowable temperature of the liquid-cooling charging cable, heating the energy storage battery using the heat generated by the DCDC, the heat generated by the liquid-cooling charging cable, and the heat of a heater until the heating demand of the energy storage battery cell is not greater than the total heat generated by the DCDC and the liquid-cooling charging cable, issuing a heater stop instruction; using the heat generated by the DCDC and the heat generated by the liquid-cooling charging cable to heat the energy storage battery; if the heating demand of the energy storage battery cell is not greater than the total heat generated by the DCDC and the liquid-cooling charging cable, the DCDC operating temperature is less than the maximum allowable temperature of the DCDC, and the operating temperature of the liquid-cooling charging cable is less than the maximum allowable temperature of the liquid-cooling charging cable, heating the energy storage battery with the heat generated by the DCDC and that generated by the liquid-cooling charging cable until the temperature of the energy storage battery cell is greater than the heating start temperature, issuing a heating stop instruction and performing heat dissipation operations on the DCDC and the liquid-cooling charging cable.

In the implementation of the preceding embodiment: if the energy storage battery cell needs to be heated, and the heating demand of the energy storage battery cell is greater than the total heat generated by the DCDC and the liquid-cooling charging cable, then the DCDC and the liquid-cooling charging cable can be used to provide heat to the energy storage battery and perform heating operations on the energy storage battery cell, thereby reducing heater workload, improving resource utilization, and improving the overall energy conversion efficiency of energy storage supercharging equipment.

Optionally, in an embodiment of the present application, if the operating state is a reverse charging state, the temperature parameters of the to-be-monitored object include the temperature of the energy storage battery cell, the bidirectional ACDC temperature parameter, and the liquid-cooling charging cable temperature parameter; according to the temperature parameters, the temperature of the to-be-monitored object is controlled, including: if the temperature of the energy storage battery cell is less than or equal to a heating start temperature, issuing a fourth heating control instruction to heat the energy storage battery according to the bidirectional ACDC temperature parameter and the liquid-cooling charging cable temperature parameter, in which the heating temperature in the fourth heating control instruction is greater than the heating start temperature and less than the preset maximum allowable temperature of the bidirectional ACDC and the preset maximum allowable temperature of the liquid-cooling charging cable; if the temperature of the energy storage battery cell is greater than or equal to a cooling start temperature, issuing a fourth cooling control instruction to perform cooling operations on the energy storage battery, the bidirectional ACDC, and the liquid-cooling charging cable until the temperature of the energy storage battery cell is less than the cooling start temperature, and issuing a cooling stop instruction, in which the cooling water temperature in the fourth cooling control instruction is less than the cooling start temperature, the maximum allowable temperature of the bidirectional ACDC, and the maximum allowable temperature of the liquid-cooling charging cable.

In the implementation of the preceding embodiment: when in the reverse charging state, the temperature of the energy storage battery, the bidirectional ACDC, and the liquid-cooling charging cable can be controlled at the same time, which reduces resource waste of a single control assembly of multiple components and improves low temperature control efficiency thereof, and improves the efficiency and convenience of temperature control.

Optionally, in an embodiment of the present application, the bidirectional ACDC temperature parameter includes a bidirectional ACDC operating temperature; and the liquid-cooling charging cable temperature parameter includes the operating temperature of the liquid-cooling charging cable. Heating the energy storage battery according to the temperature parameters of the bidirectional ACDC and the liquid-cooling charging cable includes: obtaining a heating demand of the energy storage battery cell according to the temperature of the energy storage battery cell, obtaining the heat generated by the bidirectional ACDC according to the bidirectional ACDC operating temperature, and obtaining the heat generated by the liquid-cooling charging cable according to the operating temperature of the liquid-cooling charging cable; if the heating demand of the energy storage battery cell is greater than the total heat generated by the bidirectional ACDC and the liquid-cooling charging cable, and the bidirectional ACDC operating temperature is less than the maximum allowable temperature of the bidirectional ACDC, and the operating temperature of the liquid-cooling charging cable is less than the maximum allowable temperature of the liquid-cooling charging cable, heating the energy storage battery using the heat generated by the bidirectional ACDC, the heat generated by the liquid-cooling charging cable, and the heat of a heater until the heating demand of the energy storage battery cell is not greater than the total heat generated by the bidirectional ACDC and the liquid-cooling charging cable, issuing a heater stop instruction, and heating the energy storage battery using the heat generated by the bidirectional ACDC and the heat generated by the liquid-cooling charging cable; if the heating demand of the energy storage battery cell is not greater than the total heat generated by the bidirectional ACDC and that generated by the liquid-cooling charging cable, the bidirectional ACDC operating temperature is less than the maximum allowable temperature of the bidirectional ACDC, and the operating temperature of the liquid-cooling charging cable is less than the maximum allowable temperature of the liquid-cooling charging cable, heating the energy storage battery using the heat generated by the bidirectional ACDC and the heat generated by the liquid-cooling charging cable until the temperature of the energy storage battery cell is greater than the heating start temperature, and issuing a heating stop instruction to perform heat dissipation operations on the bidirectional ACDC and the liquid-cooling charging cable.

In the implementation of the preceding embodiment: a bidirectional ACDC and a liquid-cooling charging cable can be used to provide heat to the energy storage battery, and the energy storage battery cell can be heated, thereby reducing heater workload, improving resource utilization, and improving the overall energy conversion efficiency of the energy storage supercharging equipment.

In a second aspect, an embodiment of the present application further provides a thermal management system, including a parameter determination module configured to determine the to-be-monitored object according to the operating state of the energy storage supercharging equipment and obtain the temperature parameters of the to-be-monitored object, in which the to-be-monitored object includes at least one of an energy storage battery, a bidirectional ACDC, a DCDC, and a liquid-cooling charging cable; and a control module configured to control the temperature of the to-be-monitored object according to temperature parameters.

In a third aspect, an embodiment of the present application further provides a computer program product, including computer program instructions, in which the computer program instructions are executed by a processor when running to execute the first aspect or any one of the implementation methods of the first aspect.

In a fourth aspect, an embodiment of the present application further provides an electronic device, including: a processor and a memory, in which the memory stores computer program instructions, and the computer program instructions are executed by a processor when running to execute the first aspect or any one of the implementation methods of the first aspect.

In a fifth aspect, an embodiment of the present application further provides a computer-readable storage medium, in which the computer-readable storage medium stores computer program instructions, and the computer program instructions are executed by a processor when running to execute the first aspect or any one of the implementation methods of the first aspect.

The temperature control method, program product, device, and storage medium of the energy storage supercharging equipment provided by the present application are adopted. The temperature control method of the energy storage supercharging equipment is applied to the thermal management system. The thermal management system is respectively connected with the energy storage battery, the bidirectional ACDC, the DCDC, and the liquid-cooling charging cable in the energy storage supercharging equipment. According to operating states of the energy storage supercharging equipment, the to-be-monitored object is determined. The to-be-monitored object can be understood as an object that needs temperature control. The temperature of the energy storage battery, the bidirectional ACDC, the DCDC, and the liquid-cooling charging cable can be collectively controlled, thereby reducing the cost of the whole equipment and improving the temperature control efficiency.

### Brief Description of Drawings

In order to more explicitly illustrate the technical solution of the embodiments of the present application, the drawings required for the embodiments of the present application are briefly described below. It should be understood that the following drawings only show some embodiments of the present application and should not be construed as limiting the scope of the present application. A person of ordinary skill in the art can derive other related drawings based on these drawings without the exercise of inventive efforts.
FIG. 1 is a flowchart of a temperature control method for an energy storage supercharging equipment provided in an embodiment of the present application;
FIG. 2 is a temperature control flowchart of a static state of an energy storage supercharging equipment provided in an embodiment of the present application;
FIG. 3 is a temperature control flowchart of a grid charging state of an energy storage supercharging equipment provided in an embodiment of the present application;
FIG. 4 is a temperature control flowchart of a discharging state of an energy storage supercharging equipment provided in an embodiment of the present application;
FIG. 5 is a temperature control flowchart of a reverse charging state of an energy storage supercharging equipment provided in an embodiment of the present application;
FIG. 6 is an interactive schematic diagram of a thermal management system provided in an embodiment of the present application;
FIG. 7 is a schematic diagram of a structure of a thermal management system provided in an embodiment of the present application; and
FIG. 8 is a schematic diagram of a structure of an electronic device provided in an embodiment of the present application.

### Detailed Description of Embodiments

The embodiments of the technical solution of the present application will be described in detail below with reference to the accompanying drawings. The following embodiments are only used to more clearly illustrate the technical solution of the present application, so they are only examples and cannot be used to limit the scope of protection of the present application.

Unless otherwise defined, all technical and scientific terms used in this application have the same meaning as those generally understood by technicians belonging to the technical field of the present application; the terms used in this application are only for the purpose of describing specific embodiments and are not intended to limit the present application.

In the description of the embodiments of the present application, the technical terms "first", "second", and so on are only used to distinguish different objects, and cannot be understood as indicating or implying relative importance or implicitly specifying the number, specific order or primary and secondary relationship of the indicated technical features. In the description of the embodiments of the present application, "multiple" means two or more unless otherwise clearly and specifically defined.

With the development of the new energy industry, a large number of ultra-fast charging and high-power electric vehicle charging facilities have been built in cities or service areas. Therefore, the load on the power grid is getting higher and higher, and it is difficult to increase capacity in many places.

In order to meet the performance requirements of energy storage supercharging products, a liquid-cooling temperature control solution is required. At present, the thermal management liquid-cooling temperature control systems of energy storage supercharging equipment on the market are mostly split products, that is, the energy storage battery, charging module, and liquid-cooling charging cable are separately equipped with a thermal management system for temperature control, leading to high cost and low use efficiency of thermal management. For example, some integrated storage and charging devices are equipped with different thermal management systems for the energy storage battery, charging module, and liquid-cooling charging cable, resulting in large space requirements for the whole device layout, high costs, and low thermal management efficiency.

In order to further improve energy conversion efficiency, enhance product reliability and durability, and reduce product costs, a method is required that can simultaneously temperature-control the energy storage battery, the bidirectional ACDC, the DCDC, and the liquid-cooling charging cable.

An embodiment of the present application provides a temperature control method of the energy storage supercharging equipment applied to the thermal management system. The thermal management system is respectively connected with the energy storage battery, the bidirectional ACDC, the DCDC, and the liquid-cooling charging cable in the energy storage supercharging equipment. According to operating states of the energy storage supercharging equipment, the to-be-monitored object is determined. The temperature of the energy storage battery, the bidirectional ACDC, the DCDC, and the liquid-cooling charging cable can be collectively controlled, thereby reducing the cost of the whole equipment and improving the temperature control efficiency.

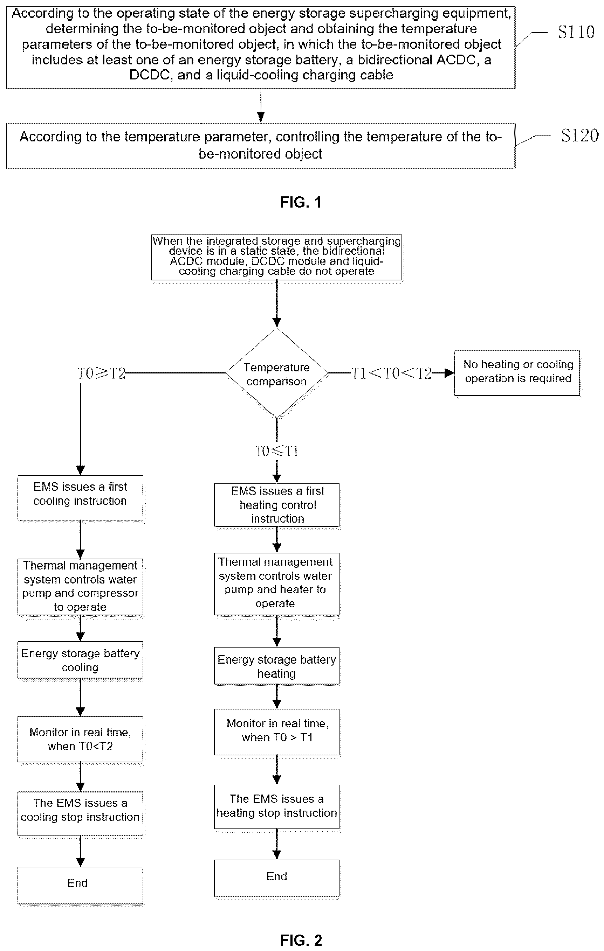

Refer to FIG. 1 for a flowchart of a temperature control method for an energy storage supercharging equipment provided in an embodiment of the present application. The temperature control method of the energy storage supercharging equipment provided in the embodiment of the present application can be applied to an electronic device. The electronic device may be physical devices such as servers, PCs, tablet computers or smart phones, or virtual devices such as virtual machines or containers. The electronic device may be a single device or a combination of multiple devices. The electronic device is equipped with a thermal management system. The thermal management system is respectively connected to the energy storage battery, the bidirectional ACDC, the DCDC, and the liquid-cooling charging cable in the energy storage supercharging equipment; the connection can be a communication connection and/or a mechanical connection. The temperature control method of the energy storage supercharging equipment may include:
S110: according to the operating state of the energy storage supercharging equipment, determining the to-be-monitored object and obtaining the temperature parameters of the to-be-monitored object, in which the to-be-monitored object includes at least one of an energy storage battery, a bidirectional ACDC, a DCDC, and a liquid-cooling charging cable; and
S120: according to the temperature parameter, controlling the temperature of the to-be-monitored object.

In S110, the energy storage supercharging equipment is a device that combines electric energy storage technology and super-fast charging technology. Therefore, the energy storage supercharging equipment can be an integrated storage and supercharging device. The integrated storage and supercharging device not only has a large-capacity energy storage function, but also supports super-fast charging technology to provide users with efficient and convenient charging services.

The energy storage supercharging equipment may include an energy storage battery, a bidirectional ACDC, a DCDC, and a liquid-cooling charging cable, in which the energy storage battery is a battery system for storing electrical energy and quickly releasing electrical energy when needed to support the charging process. A bidirectional ACDC (bidirectional ACDC converter) refers to a component that converts an alternating current (AC) voltage into a direct current (DC) voltage, and can also convert a direct current (DC) voltage into an alternating current (AC) voltage. A DCDC (DCDC converter) converts one DC voltage into another DC voltage. For example, in new energy vehicles or battery systems, DCDC converters may be used to adjust the voltage output by the battery to adapt to different power-consuming devices. The liquid-cooling charging cable is a cable that uses liquid-cooling technology to connect electric vehicles and charging piles for charging. The liquid-cooling technology can provide high heat dissipation efficiency, thereby supporting higher charging power and faster charging speed.

Since the energy storage supercharging equipment can store electrical energy and provide supercharging capacity, the operating state of the energy storage supercharging equipment may include a charging state, a discharging state or a static state. Among them, the charging state can be a grid charging state, that is, a state in which the energy storage supercharging equipment is charged from the grid, and the charging state can also be a reverse charging state, such as a state in which an electric vehicle or other device charges the energy storage supercharging equipment. The discharging state can be a state in which the energy storage supercharging equipment charges the electric vehicle or other device. The static state refers to a state in which the energy storage supercharging equipment is neither charged nor discharged.

The to-be-monitored object refers to an object that needs to be monitored in the energy storage supercharging equipment under the current operating state, including at least one of the energy storage battery, the bidirectional ACDC, the DCDC, and the liquid-cooling charging cable. It can be understood that the purpose of monitoring is to perform temperature control, so the to-be-monitored object can also be understood as an object that requires temperature control. For example, if the operating state is a static state, then the bidirectional ACDC, the DCDC, and the liquid-cooling charging cable are not operating in this state, so they can be exempted from being monitored. However, in order to ensure the safety of an energy storage supercharging equipment and improve the performance of energy storage supercharging, the energy storage battery is determined as the to-be-monitored object.

After determining the to-be-monitored object, the temperature parameters of the to-be-monitored object are obtained. For example, if the to-be-monitored object is an energy storage battery, the temperature of the energy storage battery cell can be monitored in real time, and the temperature parameter of the to-be-monitored object can be the temperature of the energy storage battery cell. For another example, when in the grid charging state, the energy storage battery and the bidirectional ACDC operate, while the DCDC and the liquid-cooling charging cable do not operate. Therefore, the energy storage battery and the bidirectional ACDC can be determined as to-be-monitored objects, and the temperature parameters of the to-be-monitored objects can be the temperature of the energy storage battery cell and the bidirectional ACDC temperature parameter.

In S120: according to the temperature parameters of the to-be-monitored object, the temperature of the to-be-monitored object is controlled. Among them, the to-be-monitored object is the component operating in the current operating state of the energy storage supercharging equipment. Therefore, it realizes temperature monitoring and temperature control for the operating components (the to-be-monitored objects include at least one of the energy storage battery, the bidirectional ACDC, the DCDC, and the liquid-cooling charging cable) under different operating states of the energy storage supercharging equipment, so as to keep the components in the energy storage supercharging equipment at their corresponding suitable or optimal operating temperatures. The stability and safety of the energy storage supercharging equipment are improved, and the service life of the energy storage supercharging equipment is also improved.

Taking the operating state as a static state as an example, the temperature control process is, for example, comparing the temperature of the energy storage battery cell with a preset heating start temperature and a cooling start temperature, respectively. The heating start temperature refers to the temperature at which the energy storage battery needs to be heated; the cooling start temperature refers to the temperature at which the energy storage battery needs to be cooled. The heating start temperature and the cooling start temperature can be set according to an optimal operating temperature range of the energy storage battery. For example, the optimal operating temperature of some energy storage batteries may be between +15°C and +35°C. The heating start temperature can be set to +10°C or lower, such as 0°C; and the cooling start temperature can be set to +40°C or higher, such as +45°C. It can be understood that the optimal operating temperature range +15°C ~ +35°C of the preceding energy storage batteries and the heating start temperature and cooling start temperature are only examples, and the embodiments of the present application are not limited by them.

If the temperature of the energy storage battery cell is less than the preset heating start temperature, it means that the temperature of the energy storage battery cell is low. Heating measures can be taken for the energy storage battery. For example, by controlling the operation of the water pump and/or heater, the liquid in the liquid-cooling pipeline can heat the energy storage battery cell. Of course, under other operating conditions, other operating components in the energy storage supercharging equipment can also provide heat to the energy storage battery cell. This solution will be described later. If the temperature of the energy storage battery cell is greater than or equal to the cooling start temperature, it means that the temperature of the energy storage battery cell is high. Cooling measures can be taken for the energy storage battery, such as controlling the operation of the water pump and compressor so that the liquid in the liquid-cooling pipeline cools the energy storage battery cell.

In the implementation of the preceding embodiment: a temperature control method of the energy storage supercharging equipment is applied to the thermal management system. The thermal management system is respectively connected with the energy storage battery, the bidirectional ACDC, the DCDC, and the liquid-cooling charging cable in the energy storage supercharging equipment. According to operating states of the energy storage supercharging equipment, the to-be-monitored object is determined. The temperature of the energy storage battery, the bidirectional ACDC, the DCDC, and the liquid-cooling charging cable can be collectively controlled, thereby reducing the cost of the whole equipment and improving the temperature control efficiency.

Refer to FIG. 2 for a temperature control flowchart of a static state of an energy storage supercharging equipment provided in an embodiment of the present application. T0 represents the temperature of the energy storage battery cell, T1 represents the heating start temperature, T2 represents the cooling start temperature, the bidirectional ACDC is a bidirectional ACDC converter, and the DCDC is a DCDC converter.

Optionally, in an embodiment of the present application, if the operating state is a static state, the bidirectional ACDC, the DCDC, and the liquid-cooling charging cable do not operate, the to-be-monitored object is an energy storage battery, and the temperature parameters of the to-be-monitored object include the temperature of the energy storage battery cell; according to the temperature parameters, the temperature of the to-be-monitored object is controlled, that is, a process of controlling the temperature of the energy storage battery.
(1) An example of the heating process: compare the temperature of the energy storage battery cell with a preset heating start temperature, and if the temperature of the energy storage battery cell is less than or equal to the preset heating start temperature, issue a first heating control instruction to heat the energy storage battery. An example of the heating operation: The heating temperature is set by means of the thermal management system. The heating temperature in the first heating control instruction is greater than the heating start temperature. For example, the heating start temperature is +15°C. In order to achieve a heating effect, the heating temperature should be higher than +15°C. Of course, the heating temperature cannot be too high, otherwise it may damage the energy storage battery. Under different operating conditions, the setting basis of the heating temperature is different, which will be introduced later. The thermal management system heats the liquid in the liquid-cooling pipeline by controlling the water pump and the heater to operate. The liquid-cooling pipeline is connected to the energy storage battery, so the liquid in the liquid-cooling pipeline can be used to heat the energy storage battery cell.
   During the heating operation, monitor the temperature of the energy storage battery cell in real time until it is greater than the heating start temperature, and issue a heating stop instruction. For example, if the thermal management system issues a heating stop instruction by means of an EMS (Energy Management System), the water pump and the heater will stop operating, and this heating process ends.
(2) An example of the cooling process: compare the temperature of the energy storage battery cell with a preset cooling start temperature, and if the temperature of the energy storage battery cell is greater than or equal to the preset cooling start temperature, issue a first cooling control instruction to perform a cooling operation on the energy storage battery. An example of the cooling operation: Set the cooling water temperature by means of the thermal management system, in which the cooling water temperature in the first cooling control instruction is less than the cooling start temperature. The thermal management system cools the liquid in the liquid-cooling pipeline by controlling the operation of the water pump and compressor, and uses the liquid in the liquid-cooling pipeline to cool the energy storage battery cell.
   During the cooling operation, the temperature of the energy storage battery cell is monitored in real time until the temperature of the energy storage battery cell is less than the cooling start temperature. The EMS can issue a cooling stop instruction, the water pump and compressor stop operating, and the cooling process ends.
(3) No heating or cooling is required. It can be understood that after comparing the temperature of the energy storage battery cell with the preset cooling start temperature and heating start temperature, the temperature of the energy storage battery cell is between the cooling start temperature and the heating start temperature (the temperature of the energy storage battery cell is less than the cooling start temperature and greater than the heating start temperature), indicating that the temperature of the energy storage battery cell is in a more suitable temperature range, and there is no need to perform heating or cooling operations on the energy storage battery cell.

In the embodiment of the present application, there can be one or more energy storage batteries. If there are multiple energy storage batteries, multiple energy storage batteries can be heated or cooled at the same time.

In the implementation of the preceding embodiment: by real-time monitoring of the temperature of the energy storage battery cell, after comparing the temperature of the energy storage battery cell with the preset cooling start temperature and heating start temperature, the temperature of the energy storage battery is controlled by the thermal management system to ensure that the battery operates within an optimal operating temperature range, thereby improving the performance and service life of the energy storage battery device.

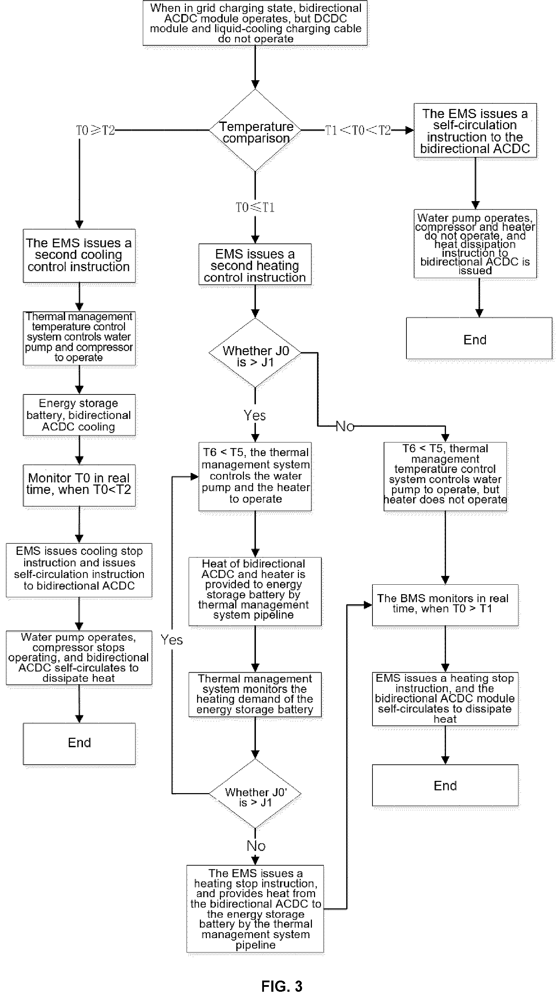

Refer to FIG. 3 for a temperature control flowchart of a grid charging state of an energy storage supercharging equipment provided in an embodiment of the present application; T5 represents the maximum allowable temperature of the bidirectional ACDC, T6 represents the bidirectional ACDC operating temperature, J0 represents the heating demand of the energy storage battery cell, J1 represents the heat generated by the bidirectional ACDC, and J0' represents the residual heating demand of the energy storage battery.

The second operating state of the energy storage supercharging equipment is described below. Optionally, in an embodiment of the present application, if the operating state is a grid charging state, the bidirectional ACDC operates, the DCDC and the liquid-cooling charging cable do not operate, the to-be-monitored objects are the energy storage battery and the bidirectional ACDC, and the temperature parameters of the to-be-monitored objects include the temperature of the energy storage battery cell and the bidirectional ACDC temperature parameters. According to the temperature parameters, the temperature of the to-be-monitored object is controlled, that is, a process of controlling the temperature of the energy storage battery and the bidirectional ACDC.
(1) An example of the heating process: compare the temperature of the energy storage battery cell with a preset heating start temperature, and if the temperature of the energy storage battery cell is less than or equal to the preset heating start temperature, issue a second heating control instruction to heat the energy storage battery according to the bidirectional ACDC temperature parameters. Unlike in the static state, since the bidirectional ACDC operates in the grid charging state, when determining a heating temperature, it is also necessary to consider the maximum operating temperature of the bidirectional ACDC. The heating temperature in the second heating control instruction is greater than the heating start temperature and less than the maximum operating temperature of the bidirectional ACDC, otherwise it may damage the bidirectional ACDC or affect the operation of the bidirectional ACDC.

In the above (1), heating the energy storage battery according to the bidirectional ACDC temperature parameter can be achieved by the following method ① or ② according to the heat supply and demand relationship.

The heating demand of the energy storage battery cell is obtained according to the temperature of the energy storage battery cell, for example, using thermodynamic principles (such as the first law and the second law of thermodynamics, etc.) to calculate the heat required for the energy storage battery cell to be heated from a current temperature to a target temperature (for example, greater than the heating start temperature).

The bidirectional ACDC temperature parameters include the bidirectional ACDC operating temperature, and the heat generated by the bidirectional ACDC is obtained according to the bidirectional ACDC temperature parameters. The heat generated by the bidirectional ACDC during operation due to factors such as resistance and current may also affect the heat generated by the bidirectional ACDC, including its operating power. The heat generated by the bidirectional ACDC is calculated based on the above factors.
① If the heating demand of the energy storage battery cell is greater than the heat generated by the bidirectional ACDC, and the bidirectional ACDC operating temperature is less than the preset maximum allowable temperature of the bidirectional ACDC, it means that the bidirectional ACDC can operate, but the heat generated by the bidirectional ACDC is insufficient to heat the energy storage battery cell from a current temperature to a target temperature. Therefore, the energy storage battery is heated using the heat generated by the bidirectional ACDC and the heat of a heater. The implementation method is, for example, that the thermal management system controls the water pump and the heater to operate, and provides the heat generated by the bidirectional ACDC and the heat of the heater to the energy storage battery through a thermal management system pipeline.

During the heating process, the residual heat demand of the energy storage battery can be calculated in real time or at a preset time interval. The residual heating demand of the energy storage battery refers to the heat demand required for heating to a target temperature after the energy storage battery cell has been heated for a period of time. If the residual heating demand of the energy storage battery is still greater than the heat generated by the bidirectional ACDC, repeat the above process ① and use the heat generated by the bidirectional ACDC and the heat of the heater to heat the energy storage battery.

During the heating operation, monitor the temperature of the energy storage battery cell in real time until the heating demand of the energy storage battery cell is not greater than the heat generated by the bidirectional ACDC, indicating that the heat generated by the bidirectional ACDC is sufficient to heat the energy storage battery cell from a current temperature to a target temperature, and issue a heater stop instruction, the heater stops operating. After that, use the heat generated by the bidirectional ACDC to heat the energy storage battery.

② If the heating demand of the energy storage battery cell is not greater than the heat generated by the bidirectional ACDC, and the bidirectional ACDC operating temperature is less than the preset maximum allowable temperature of the bidirectional ACDC, it means that the bidirectional ACDC is operating normally, and the heat generated by the bidirectional ACDC is sufficient to heat the energy storage battery cell from a current temperature to a target

temperature. In addition, there may be excess heat generated by the bidirectional ACDC, which requires heat dissipation.

In this case, heat the energy storage battery using the heat generated by the bidirectional ACDC until the temperature of the energy storage battery cell is greater than the heating start temperature, and issue a heating stop instruction, the bidirectional ACDC is subjected to heat dissipation operation so that the bidirectional ACDC is at its suitable temperature.

(2) An example of the cooling process: If the temperature of the energy storage battery cell is greater than or equal to a preset cooling start temperature, issue a second cooling control instruction. Since both the energy storage battery and the bidirectional ACDC operate when in a grid charging state, the second cooling control instruction is used to perform cooling operations on the energy storage battery and the bidirectional ACDC. An example of the cooling operation: The thermal management system cools the liquid in the liquid-cooling pipeline by controlling the water pump and compressor to operate. The liquid-cooling pipeline is connected to the energy storage battery and the bidirectional ACDC, respectively. The liquid in the liquid-cooling pipeline can be used to cool the energy storage battery cell and the bidirectional ACDC, respectively.

During the cooling operation, monitor the temperature of the energy storage battery cell in real time or detect it at a preset interval until the temperature of the energy storage battery cell is less than the cooling start temperature, and issue a cooling stop instruction, in which the cooling water temperature in the second cooling control instruction is less than the cooling start temperature and the maximum operating temperature of the bidirectional ACDC. And by means of the EMS, issue a self-circulation instruction for the bidirectional ACDC to enable the water pump (the compressor and the heater do not operate) to dissipate heat from the bidirectional ACDC.

(3) No heating or cooling is required. If the comparison between the temperature of the energy storage battery cell and the preset cooling start temperature and heating start temperature shows that the temperature of the energy storage battery cell is between the cooling start temperature and the heating start temperature, there is no need to perform a heating operation or a cooling operation on the energy storage battery cell.

Although the energy storage battery is at a suitable temperature, the bidirectional ACDC operates during this process, so it will generate heat. In order to avoid overheating of the bidirectional ACDC, the EMS can issue a self-circulation instruction for the bidirectional ACDC to enable the water pump (the compressor and the heater do not operate) and dissipate heat from the bidirectional ACDC.

In the embodiment of the present application, one or more energy storage batteries can be heated or cooled at the same time, and one or more bidirectional ACDCs can be cooled at the same time.

In the implementation of the preceding embodiment: when in the grid charging state, the temperature of the energy storage battery and the bidirectional ACDC can be controlled at the same time, improving the efficiency and convenience of temperature control. If the energy storage battery cell needs to be heated, and if the heating demand of the energy storage battery cell is greater than the heat generated by the bidirectional ACDC, then the heat generated by the bidirectional ACDC and the heat of the heater can be used to provide heat to the energy storage battery to heat the energy storage battery cell; the heat generated by the bidirectional ACDC can be reasonably utilized to improve the overall energy conversion efficiency of the energy storage supercharging equipment.

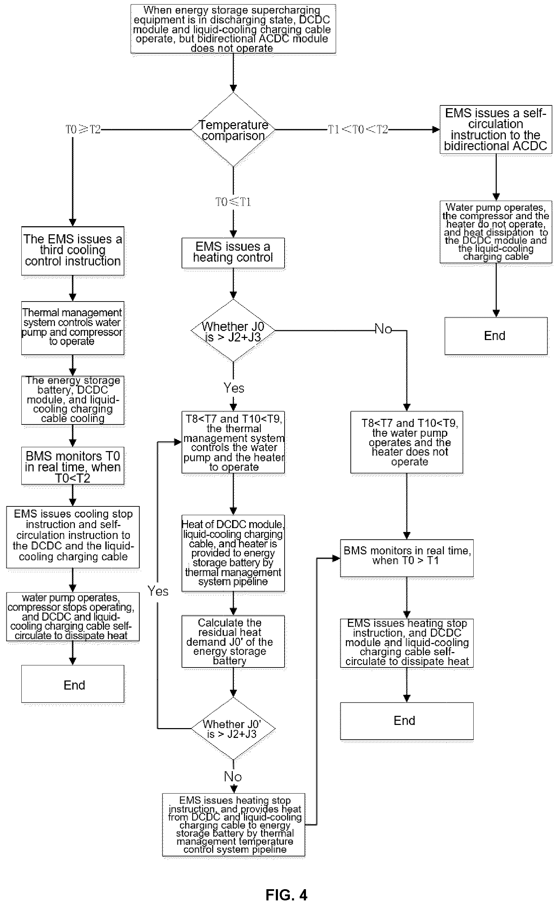

Refer to FIG. 4 for a temperature control flowchart of a discharging state of an energy storage supercharging equipment provided in an embodiment of the present application. T7 represents the maximum allowable temperature of the DCDC, T8 represents the DCDC operating temperature, T9 represents the maximum allowable temperature of the liquid-cooling charging cable, T10 represents the liquid-cooling charging cable operating temperature, J2 represents the heat generated by the DCDC, and J3 represents the heat generated by the liquid-cooling charging cable.

The third operating state of the energy storage supercharging equipment is described below. Optionally, in an embodiment of the present application, if the operating state is a discharging state, the bidirectional ACDC does not operate, and the to-be-monitored objects are the energy storage battery, the DCDC, and the liquid-cooling charging cable, that is, controlling the temperature of the energy storage battery, the DCDC, and the liquid-cooling charging cable. The temperature parameters of the to-be-monitored object include the DCDC temperature parameter and the liquid-cooling charging cable temperature parameter.
(1) An example of the heating process: compare the temperature of the energy storage battery cell with a preset heating start temperature, and if the temperature of the energy storage battery cell is less than or equal to the preset heating start temperature, issue a third heating control instruction to heat the energy storage battery according to the DCDC temperature parameter and the liquid-cooling charging cable temperature parameter.

Since the DCDC and the liquid-cooling charging cable operate in the discharging state, when determining the heating temperature, it is also necessary to consider that the heating temperature cannot exceed the preset maximum operating temperature of the DCDC and the preset maximum operating temperature of the liquid-cooling charging cable, otherwise the DCDC and the liquid-cooling charging cable will not operate. That is, the heating temperature in the third heating control instruction is greater than the heating start temperature and less than the preset maximum operating temperature of the DCDC and the preset maximum operating temperature of the liquid-cooling charging cable.

It is also necessary to determine that the DCDC operating temperature is less than the preset maximum allowable temperature of the DCDC, and the operating temperature of the liquid-cooling charging cable is less than the preset maximum allowable temperature of the liquid-cooling charging cable. The above two conditions indicate that the DCDC and the liquid-cooling charging cable can operate. That is to say, if the DCDC operating temperature is greater than the maximum allowable temperature of the DCDC, the DCDC may be damaged due to excessive temperature and cannot operate, that is, the energy storage supercharging equipment may not be able to discharge. The DCDC needs to be cooled first until it meets the temperature standard and the DCDC operates normally; the same applies to liquid-cooling charging cables.

Calculate the heating demand of energy storage battery cells, the heat generated by the DCDC during operations of the DCDC and the heat generated by the liquid-cooling charging cable during operations of the liquid-cooling charging cable, respectively.

The heating demand of the energy storage battery cell is obtained according to the temperature of the energy storage battery cell, and the implementation method is described above. The DCDC temperature parameter include the DCDC operating temperature. The heat generated by the DCDC can be obtained according to the DCDC temperature parameter, and the heat generated by the liquid-cooling charging cable can be obtained according to the temperature parameter of the liquid-cooling charging cable.

In the preceding third heating control instruction, heating the energy storage battery according to the DCDC temperature parameter and the liquid-cooling charging cable temperature parameter can be achieved by the following method ① or ② according to the heat supply and demand relationship.
① If the heating demand of the energy storage battery cell is greater than the total heat generated by the DCDC and the liquid-cooling charging cable, it means that the heat generated by the DCDC and the heat generated by the liquid-cooling charging cable are insufficient to heat the energy storage battery cell from a current temperature to a target temperature. Then heat the energy storage battery using the heat generated by the DCDC, the heat generated by the liquid-cooling charging cable, and the heat of the heater. The heat of the heater can be used to supplement the gap of the heat generated by the DCDC and the heat generated by the liquid-cooling charging cable. The thermal management system controls the water pump and the heater to operate, and provides the heat generated by the DCDC, the heat generated by the liquid-cooling charging cable, and the heat of a heater to the energy storage battery by means of the liquid-cooling system pipeline, so as to realize the heating operation on the energy storage battery.

During the heating process, the residual heating demand of the energy storage battery can be calculated in real time or at a preset time interval. If the residual heating demand of the energy storage battery is still greater than the total heat generated by the DCDC and the liquid-cooling charging cable, repeat the step of "heating the energy storage battery using the heat generated by the DCDC, the heat generated by the liquid-cooling charging cable, and the heat of a heater" until it is detected that the residual heating demand of the energy storage battery is not greater than the total heat generated by the DCDC and the liquid-cooling charging cable, it means that at this moment, the use of the heat generated by the DCDC and the heat generated by the liquid-cooling charging cable is sufficient to provide heat for the energy storage battery cell. Therefore, a heater stop instruction is issued, the heater stops operating, and the heat generated by the DCDC and the heat generated by the liquid-cooling charging cable are used to heat the energy storage battery.

② If the heating demand of the energy storage battery cell is not greater than the total heat generated by the DCDC conversion and the liquid-cooling charging cable, and the DCDC operating temperature is less than the maximum allowable temperature of the DCDC and that of the liquid-cooling charging cable is less than the maximum allowable temperature of the liquid-cooling charging cable, it means that the heat generated by the DCDC and the heat generated by the liquid-cooling charging cable are sufficient to heat the energy storage battery cell from a current temperature to a target temperature. After the energy storage battery is heated, there may be excessive heat generated by the DCDC and the liquid-cooling charging cable, which requires heat dissipation.

In this case, the heat generated by the DCDC and the heat generated by the liquid-cooling charging cable can be used to heat the energy storage battery until the temperature of the energy storage battery cell is greater than the heating start temperature. Then a heating stop instruction will be issued and heat dissipation operations will be performed on the DCDC and the liquid-cooling charging cable.

(2) An example of the cooling process: If the temperature of the energy storage battery cell is greater than or equal to a preset cooling start temperature, issue a third cooling control instruction. Since all the energy storage battery, the DCDC, and the liquid-cooling charging cable operate when in a discharging state, the third cooling control instruction is used to perform cooling operations on the energy storage battery, the DCDC, and the liquid-cooling charging cable. An example of the cooling operation: The thermal management system cools the liquid in the liquid-cooling pipeline by controlling the water pump and compressor to operate. The liquid-cooling pipeline is connected to the energy storage battery, the DCDC, and the liquid-cooling charging cable, respectively. The liquid in the liquid-cooling pipeline can be used to cool the energy storage battery cell, the DCDC, and the liquid-cooling charging cable, respectively.

During the cooling operation, monitor the temperature of the energy storage battery cell in real time or detect it at a preset interval until the temperature of the energy storage battery cell is less than the cooling start temperature, and issue a cooling stop instruction, in which the cooling water temperature in the third cooling control instruction is less than the cooling start temperature and the maximum operating temperatures of both the DCDC and the liquid-cooling charging cable. And by means of the EMS, issue a self-circulation instruction for the DCDC and the liquid-cooling charging cable to enable the water pump (the compressor and the heater do not operate) to dissipate heat from the DCDC and the liquid-cooling charging cable.

(3) Situations where heating and cooling operations are not required: If the comparison between the temperature of the energy storage battery cell and the preset cooling start temperature and heating start temperature shows that the temperature of the energy storage battery cell is between the cooling start temperature and the heating start temperature, there is no need to perform a heating operation or a cooling operation on the energy storage battery cell. In addition, in order to avoid excessive heat generated by the DCDC and the liquid-cooling charging cable due to operations, the EMS can issue self-circulation instructions for the DCDC and the liquid-cooling charging cable to enable the water pump (the compressor and the heater do not operate) and dissipate heat from the DCDC and the liquid-cooling charging cable.

In the embodiment of the present application, one or more energy storage batteries, DCDCs, and liquid-cooling charging cables can be configured. Therefore, it is possible to heat or cool one or more energy storage batteries, cool one or more DCDCs, and cool one or more liquid-cooling charging cables at the same time.

In the implementation of the preceding embodiment: in the discharging state, the temperature of the energy storage battery, the DCDC, and the liquid-cooling charging cable can be controlled at the same time, improving the efficiency and convenience of temperature control. If the energy storage battery cell needs to be heated, and the heating demand of the energy storage battery cell is greater than the total heat generated by the DCDC and the liquid-cooling charging cable, then the DCDC and the liquid-cooling charging cable can be used to provide heat to the energy storage battery and perform heating operations on the energy storage battery cell, thereby reducing heater workload, improving resource utilization, and improving the overall energy conversion efficiency of energy storage supercharging equipment.

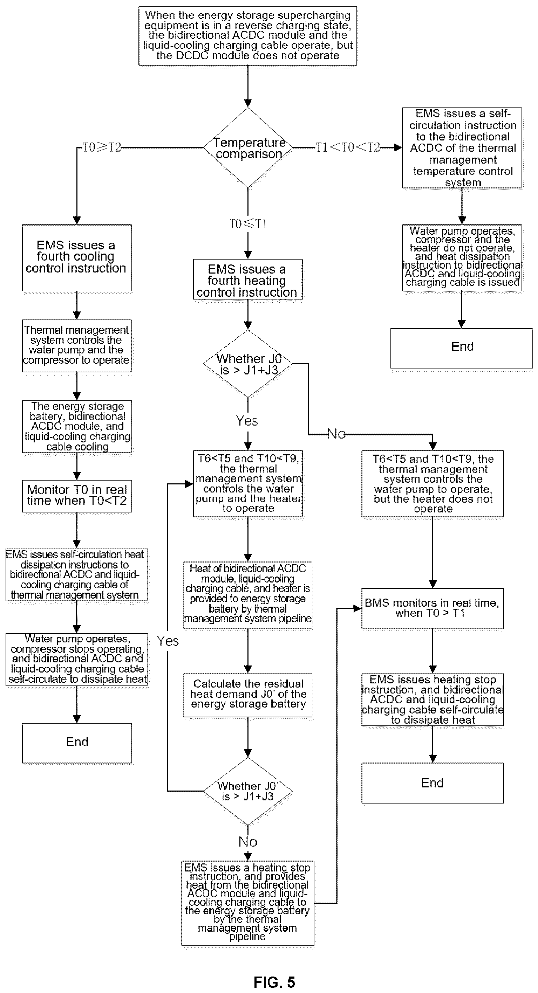

Refer to FIG. 5 for a temperature control flowchart of a reverse charging state of an energy storage supercharging equipment provided in an embodiment of the present application.

The fourth operating state of the energy storage supercharging equipment is described below. Optionally, in an embodiment of the present application, if the operating state is a reverse charging state, the bidirectional ACDC and the liquid-cooling charging cable operate, the DCDC does not operate, and the to-be-monitored objects are the energy storage battery, the bidirectional ACDC, and the liquid-cooling charging cable, that is, controlling the temperature of the energy storage battery, the bidirectional ACDC, and the liquid-cooling charging cable. The temperature parameters of the to-be-monitored object include the temperature of the energy storage battery cell, the bidirectional ACDC temperature parameter, and the liquid-cooling charging cable temperature parameter.
(1) An example of the heating process: Compare the temperature of the energy storage battery cell with a preset heating start temperature, and if the temperature of the energy storage battery cell is less than or equal to a heating start temperature, issue a fourth heating control instruction to heat the energy storage battery according to the bidirectional ACDC temperature parameter and the liquid-cooling charging cable temperature parameter.

**In** the reverse charging state, the bidirectional ACDC and the liquid-cooling charging cable operate. When determining the heating temperature, it is also necessary to consider that the preset heating temperature cannot exceed the preset maximum allowable temperature of the bidirectional ACDC and the preset maximum allowable temperature of the liquid-cooling charging cable, otherwise the bidirectional ACDC and the liquid-cooling charging cable will not operate. Therefore, the heating temperature in the fourth heating control instruction is greater than the heating start temperature and less than the preset maximum allowable temperature of the bidirectional ACDC and the preset maximum allowable temperature of the liquid-cooling charging cable.

In order to ensure the normal operation of the bidirectional ACDC and the liquid-cooling charging cable, it is also necessary to determine that the bidirectional ACDC operating temperature is less than the maximum allowable temperature of the bidirectional ACDC, and the operating temperature of the liquid-cooling charging cable is less than the maximum allowable temperature of the liquid-cooling charging cable; if not met, the bidirectional ACDC and/or the liquid-cooling charging cable should be cooled first until they meet the temperature standard.

Calculate the heating demand of energy storage battery cells, the heat generated by the bidirectional ACDC during operations of the bidirectional ACDC and the heat generated by the liquid-cooling charging cable during operations of the liquid-cooling charging cable, respectively. Refer to the previous text for the implementation method.

After determining the heating temperature and calculating heat, in the preceding fourth heating control instruction, heating the energy storage battery according to the temperature parameters of the bidirectional ACDC and the liquid-cooling charging cable can be achieved by the following method ① or ② according to the heat supply and demand relationship.
① If the heating demand of the energy storage battery cell is greater than the total heat generated by the bidirectional ACDC and the liquid-cooling charging cable, it means that the heat generated by the bidirectional ACDC and the heat generated by the liquid-cooling charging cable are insufficient to heat the energy storage battery cell from a current temperature to a target temperature. **Then** heat the energy storage battery using the heat generated by the bidirectional ACDC, the heat generated by the liquid-cooling charging cable, and the heat of the heater. The thermal management system controls the water pump and the heater to operate, and provides the heat generated by the bidirectional ACDC, the heat generated by the liquid-cooling charging cable, and the heat of a heater to the energy storage battery by means of the liquid-cooling system pipeline, so as to realize the heating operation on the energy storage battery.

During the heating process, the residual heating demand of the energy storage battery can be calculated in real time or at a preset time interval. If the residual heating demand of the energy storage battery is still greater than the total heat generated by the bidirectional ACDC and the liquid-cooling charging cable, repeat the step of "heating the energy storage battery using the heat generated by the bidirectional ACDC, the heat generated by the liquid-cooling charging cable, and the heat of a heater" until it is detected that the heating demand of the energy storage battery cell is not greater than the total heat generated by the bidirectional ACDC and the liquid-cooling charging cable, a heater stop instruction is issued, the heater stops operating, and the heat generated by the bidirectional ACDC and the heat generated by the liquid-cooling charging cable are used to heat the energy storage battery.

② If the heating demand of the energy storage battery cell is not greater than the total heat generated by the bidirectional ACDC and the heat generated by the liquid-cooling charging cable, and the bidirectional ACDC operating temperature is less than the maximum allowable temperature of the bidirectional ACDC, and the operating temperature of the liquid-cooling charging cable is less than the maximum allowable temperature of the liquid-cooling charging cable, it means that the heat generated by the bidirectional ACDC and the heat generated by the liquid-cooling charging cable are sufficient to heat the energy storage battery cell from a current temperature to a target temperature. Then, use the heat generated by the bidirectional ACDC and the heat generated by the liquid-cooling charging cable to heat the energy storage battery until the temperature of the energy storage battery cell is greater than the heating start temperature, issue a heating stop instruction, and perform heat dissipation operations on the bidirectional ACDC and the liquid-cooling charging cable.

(2) An example of the cooling process: If the temperature of the energy storage battery cell is greater than or equal to the cooling start temperature, issue a fourth cooling control instruction. Since both the bidirectional ACDC and the liquid-cooling charging cable operate when in a reverse charging state, the fourth cooling control instruction is used to perform cooling operations on the energy storage battery, the bidirectional ACDC, and the liquid-cooling charging cable. An example of the cooling operation: The thermal management system cools the liquid in the liquid-cooling pipeline by controlling the water pump and compressor to operate. The liquid-cooling pipeline is connected to the energy storage battery, the bidirectional ACDC, and the liquid-cooling charging cable, respectively. The liquid in the liquid-cooling pipeline can be used to cool the energy storage battery cell, the bidirectional ACDC, and the liquid-cooling charging cable, respectively.

During the cooling operation, monitor the temperature of the energy storage battery cell in real time or detect it at a preset interval until the temperature of the energy storage battery cell is less than the cooling start temperature, and issue a cooling stop instruction, in which the cooling water temperature in the fourth cooling control instruction is less than the cooling start temperature and the maximum allowable temperatures of both the bidirectional ACDC and the liquid-cooling charging cable. And by means of the EMS, issue a self-circulation instruction for the bidirectional ACDC and the liquid-cooling charging cable to enable the water pump (the compressor and the heater do not operate) to dissipate heat from the bidirectional ACDC and the liquid-cooling charging cable.

(3) Situations where heating and cooling operations are not required: If the comparison between the temperature of the energy storage battery cell and the preset cooling start temperature and heating start temperature shows that the temperature of the energy storage battery cell is between the cooling start temperature and the heating start temperature, there is no need to perform a heating operation or a cooling operation on the energy storage battery cell. In addition, in order to avoid excessive heat generated by the bidirectional ACDC and the liquid-cooling charging cable due to operations, the EMS can issue self-circulation instructions for the bidirectional ACDC and the liquid-cooling charging cable to enable the water pump (the compressor and the heater do not operate) and dissipate heat from the bidirectional ACDC and the liquid-cooling charging cable.

In the embodiment of the present application, one or more energy storage batteries, bidirectional ACDCs, and liquid-cooling charging cables can be configured. Therefore, it is possible to heat or cool one or more energy storage batteries, cool one or more bidirectional ACDCs, and cool one or more liquid-cooling charging cables at the same time.

In the implementation of the preceding embodiment: when in the reverse charging state, the temperature of the energy storage battery, the bidirectional ACDC, and the liquid-cooling charging cable can be controlled at the same time, which reduces resource waste of a single control assembly of multiple components and improves low temperature control efficiency thereof, and improves the efficiency and convenience of temperature control. And a bidirectional ACDC and a liquid-cooling charging cable can be used to provide heat to the energy storage battery, and the energy storage battery cell can be heated, thereby reducing heater workload, improving resource utilization, and improving the overall energy conversion efficiency of the energy storage supercharging equipment.

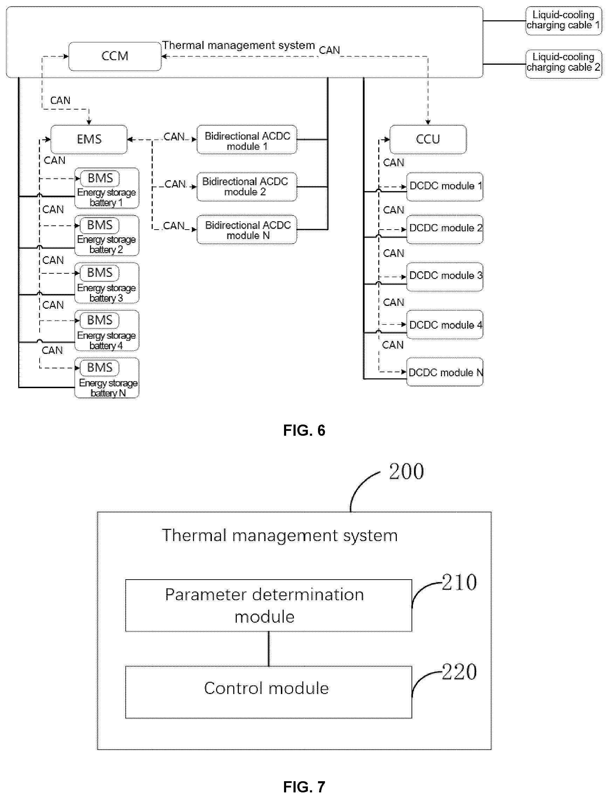

Refer to FIG. 6 for an interactive schematic diagram of a thermal management system provided in an embodiment of the present application.

In an optional embodiment, the thermal management system is respectively connected with the energy storage battery, the bidirectional ACDC (i.e., the bidirectional ACDC module in FIG. 6), the DCDC (i.e., the DCDC module in FIG. 6), and the liquid-cooling charging cable. There are multiple energy storage batteries, bidirectional ACDCs, DCDCs and liquid-cooling charging cables. The CCM in the thermal management system interacts with the EMS (Energy Management System) and CCU (Communication Control Unit) through CAN (Controller Area Network). The CCU interacts with 1 or more DCDCs via CAN.

Refer to FIG. 7 for a schematic diagram of a thermal management system structure according to an embodiment of the present application. The embodiment of the present application provides a thermal management system 200, in which a thermal management system is deployed, and the thermal management system is respectively connected to the energy storage battery, the bidirectional ACDC, the DCDC, and the liquid-cooling charging cable in the energy storage supercharging equipment. The thermal management system 200 includes:
a parameter determination module 210 configured for determining a to-be-monitored object according to an operating state of the energy storage supercharging equipment and obtaining the temperature parameters of the to-be-monitored object, in which the to-be-monitored object includes at least one of the energy storage battery, the bidirectional ACDC, the DCDC, and the liquid-cooling charging cable; and
a control module 220 configured for controlling the temperature of the to-be-monitored object according to the temperature parameter.

Optionally, in an embodiment of the present application, if the operating state of the thermal management system 200 is a static state, the temperature parameters of the to-be-monitored object include the temperature of the energy storage battery cell. The control module 220 is specifically configured for, if the temperature of the energy storage battery cell is less than or equal to a preset heating start temperature, issuing a first heating control instruction to heat the energy storage battery until the temperature of the energy storage battery cell is greater than the heating start temperature, and issuing a heating stop instruction, in which the heating temperature in the first heating control instruction is greater than the heating start temperature; if the temperature of the energy storage battery cell is greater than or equal to a preset cooling start temperature, issuing a first cooling control instruction to perform a cooling operation on the energy storage battery until the temperature of the energy storage battery cell is less than the cooling start temperature, and issuing a cooling stop instruction, in which the cooling water temperature in the first cooling control instruction is less than the cooling start temperature.

Optionally, in an embodiment of the present application, if the operating state of the thermal management system 200 is a grid charging state, the temperature parameters of the to-be-monitored object include the temperature of the energy storage battery cell and the bidirectional ACDC temperature parameter. The control module 220 is specifically configured for, if the temperature of the energy storage battery cell is less than or equal to a preset heating start temperature, issuing a second heating control instruction to heat the energy storage battery according to the bidirectional ACDC temperature parameter, in which the heating temperature in the second heating control instruction is greater than the heating start temperature and less than the maximum operating temperature of the bidirectional ACDC; if the temperature of the energy storage battery cell is greater than or equal to a preset cooling start temperature, issuing a second cooling control instruction to perform a cooling operation on the energy storage battery and the bidirectional ACDC until the temperature of the energy storage battery cell is less than the cooling start temperature, and issuing a cooling stop instruction, in which the cooling water temperature in the second cooling control instruction is less than the cooling start temperature and the maximum operating temperature of the bidirectional ACDC.

Optionally, in an embodiment of the present application, in the thermal management system 200, the bidirectional ACDC temperature parameter includes a bidirectional ACDC operating temperature. The control module 220 is specifically configured for obtaining a heating demand of the energy storage battery cell according to the temperature of the energy storage battery cell, obtaining the heat generated by the bidirectional ACDC according to the bidirectional ACDC temperature parameter; if the heating demand of the energy storage battery cell is greater than the heat generated by the bidirectional ACDC, and the bidirectional ACDC operating temperature is less than the preset maximum allowable temperature of the bidirectional ACDC, using the heat generated by the bidirectional ACDC and the heat of a heater to heat the energy storage battery until the heating demand of the energy storage battery cell is not greater than the heat generated by the bidirectional ACDC; issuing a heater stop instruction, and then heating the energy storage battery with the heat generated by the bidirectional ACDC; if the heating demand of the energy storage battery cell is not greater than the heat generated by the bidirectional ACDC, and the bidirectional ACDC operating temperature is less than the preset maximum allowable temperature of the bidirectional ACDC, using the heat generated by the bidirectional ACDC to heat the energy storage battery until the temperature of the energy storage battery cell is greater than an heating start temperature, issuing a heating stop instruction, and performing a heat dissipation operation on the bidirectional ACDC.

Optionally, in an embodiment of the present application, in the thermal management system 200, if the operating state is a discharging state, the temperature parameters of the to-be-monitored object include the temperature of the energy storage battery cell, the DCDC temperature parameter and the liquid-cooling charging cable temperature parameter; the control module 220 is specifically configured for, if the temperature of the energy storage battery cell is less than or equal to a preset heating start temperature, issuing a third heating control instruction to heat the energy storage battery according to the DCDC temperature parameter and the liquid-cooling charging cable temperature parameter, in which the heating temperature in the third heating control instruction is greater than the heating start temperature and less than the preset maximum operating temperature of the DCDC and the preset maximum operating temperature of the liquid-cooling charging cable; if the temperature of the energy storage battery cell is greater than or equal to a preset cooling start temperature, issuing a third cooling control instruction to perform cooling operations on the energy storage battery, the DCDC and the liquid-cooling charging cable until the temperature of the energy storage battery cell is less than the cooling start temperature, and issuing a cooling stop instruction, in which the cooling water temperature in the third cooling control instruction is less than the cooling start temperature, the maximum operating temperature of the DCDC, and the maximum operating temperature of the liquid-cooling charging cable.

Optionally, in an embodiment of the present application, in the thermal management system 200, the DCDC temperature parameter includes the DCDC operating temperature; and the liquid-cooling charging cable temperature parameter includes the operating temperature of the liquid-cooling charging cable. The control module 220 is specifically configured for obtaining a heating demand of the energy storage battery cell according to the temperature of the energy storage battery cell, obtaining the heat generated by the DCDC according to the DCDC temperature parameter, and obtaining the heat generated by the liquid-cooling charging cable according to the liquid-cooling charging cable temperature parameter; if the heating demand of the energy storage battery cell is greater than the total heat generated by the DCDC and the liquid-cooling charging cable, the DCDC operating temperature is less than the preset maximum allowable temperature of the DCDC, and the operating temperature of the liquid-cooling charging cable is less than the preset maximum allowable temperature of the liquid-cooling charging cable, heating the energy storage battery using the heat generated by the DCDC, the heat generated by the liquid-cooling charging cable, and the heat of the heater until the heating demand of the energy storage battery cell is not greater than the total heat generated by the DCDC and the liquid-cooling charging cable, issuing a heater stop instruction; using the heat generated by the DCDC and the heat generated by the liquid-cooling charging cable to heat the energy storage battery; if the heating demand of the energy storage battery cell is not greater than the total heat generated by the DCDC and the liquid-cooling charging cable, the DCDC operating temperature is less than the maximum allowable temperature of the DCDC, and the operating temperature of the liquid-cooling charging cable is less than the maximum allowable temperature of the liquid-cooling charging cable, heating the energy storage battery with the heat generated by the DCDC and that generated by the liquid-cooling charging cable until the temperature of the energy storage battery cell is greater than the heating start temperature, issuing a heating stop instruction and performing heat dissipation operations on the DCDC and the liquid-cooling charging cable.

Optionally, in an embodiment of the present application, if the operating state of the thermal management system 200 is a reverse charging state, the temperature parameters of the to-be-monitored object include the temperature of the energy storage battery cell, the bidirectional ACDC temperature parameter, and the liquid-cooling charging cable temperature parameter. The control module 220 is specifically configured for, if the temperature of the energy storage battery cell is less than or equal to a heating start temperature, issuing a fourth heating control instruction to heat the energy storage battery according to the bidirectional ACDC temperature parameter and the liquid-cooling charging cable temperature parameter, in which the heating temperature in the fourth heating control instruction is greater than the heating start temperature and less than the preset maximum allowable temperature of the bidirectional ACDC and the preset maximum allowable temperature of the liquid-cooling charging cable; if the temperature of the energy storage battery cell is greater than or equal to a cooling start temperature, issuing a fourth cooling control instruction to perform cooling operations on the energy storage battery, the bidirectional ACDC, and the liquid-cooling charging cable until the temperature of the energy storage battery cell is less than the cooling start temperature, and issuing a cooling stop instruction, in which the cooling water temperature in the fourth cooling control instruction is less than the cooling start temperature, the maximum allowable temperature of the bidirectional ACDC, and the maximum allowable temperature of the liquid-cooling charging cable.

Optionally, in an embodiment of the present application, in the thermal management system 200, the bidirectional ACDC temperature parameter includes a bidirectional ACDC operating temperature; and the liquid-cooling charging cable temperature parameter includes the operating temperature of the liquid-cooling charging cable. The control module 220 is specifically configured for obtaining a heating demand of the energy storage battery cell according to the temperature of the energy storage battery cell, obtaining the heat generated by the bidirectional ACDC according to the bidirectional ACDC operating temperature, and obtaining the heat generated by the liquid-cooling charging cable according to the operating temperature of the liquid-cooling charging cable; if the heating demand of the energy storage battery cell is greater than the total heat generated by the bidirectional ACDC and the liquid-cooling charging cable, and the bidirectional ACDC operating temperature is less than the maximum allowable temperature of the bidirectional ACDC, and the operating temperature of the liquid-cooling charging cable is less than the maximum allowable temperature of the liquid-cooling charging cable, heating the energy storage battery using the heat generated by the bidirectional ACDC, the heat generated by the liquid-cooling charging cable, and the heat of a heater until the heating demand of the energy storage battery cell is not greater than the total heat generated by the bidirectional ACDC and the liquid-cooling charging cable, issuing a heater stop instruction, and heating the energy storage battery using the heat generated by the bidirectional ACDC and the heat generated by the liquid-cooling charging cable; if the heating demand of the energy storage battery cell is not greater than the total heat generated by the bidirectional ACDC and that generated by the liquid-cooling charging cable, the bidirectional ACDC operating temperature is less than the maximum allowable temperature of the bidirectional ACDC, and the operating temperature of the liquid-cooling charging cable is less than the maximum allowable temperature of the liquid-cooling charging cable, heating the energy storage battery using the heat generated by the bidirectional ACDC and the heat generated by the liquid-cooling charging cable until the temperature of the energy storage battery cell is greater than the heating start temperature, and issuing a heating stop instruction to perform heat dissipation operations on the bidirectional ACDC and the liquid-cooling charging cable.

It should be understood that the system corresponds to the preceding embodiment of the temperature control method of the energy storage supercharging equipment and can perform the various steps involved in the preceding method embodiment. The specific functions of the system can be referred to the description above. To avoid repetition, detailed description is appropriately omitted here. The system includes at least one software function module that can be stored in a memory or solidified in an operating system (OS) of the system in the form of software or firmware.

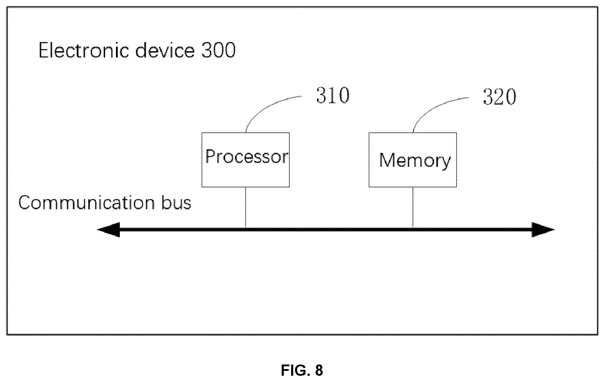

Refer to FIG. 8 for a schematic diagram of a structure of an electronic device provided in an embodiment of the present application. An electronic device 300 provided in an embodiment of the present application includes: a processor 310 and a memory 320, in which the memory 320 stores computer-readable instructions executable by the processor 310, and when the computer-readable instructions are executed by the processor 310, the above method is performed.

The embodiment of the present application further provides a storage medium, on the storage medium a computer program is stored, and the computer program executes the above method when run by a processor.

The storage medium can be implemented by any type of volatile or nonvolatile storage device or a combination thereof, such as static random access memory (SRAM), electrically erasable programmable read-only memory (EEPROM), erasable programmable read only memory (EPROM), programmable red-only memory (PROM), read-only memory (ROM), magnetic storage, flash memory, magnetic disk or compact disk.

In the several embodiments provided in the embodiments of the present application, it should be understood that the disclosed system and method can also be implemented in other ways. The system embodiments described above are merely illustrative, for example, the flowcharts and block diagrams in the accompanying drawings show possible architectures, functions and operations of systems, methods and computer program products according to multiple embodiments of the present application. In this regard, each box in the flowchart or block diagram can represent a module, program segment or part of the code, which contains one or more executable instructions for implementing a specified logical function. It should also be noted that in some alternative implementations, the functions marked in the boxes may also occur in a different order than those marked in the drawings. For example, two consecutive boxes can actually be executed in roughly parallel, and they can sometimes be executed in reverse order, depending on the function involved. It should also be noted that each box in the block diagram and/or flowchart, as well as a combination of boxes in the block diagram and/or flowchart, can be implemented with a dedicated hardware-based system that performs a specified function or action, or can be implemented with a combination of dedicated hardware and computer instructions.

In addition, the functional modules in various embodiments of the present application can be integrated together to form an independent part, or each module can exist separately, or two or more modules can be integrated to form an independent part.

The above description is only an optional implementation of the embodiment of the present application, but the protection scope of the embodiment of the present application is not limited to this. Any technician familiar with the technical field can easily think of changes or replacements within the technical scope disclosed in the embodiment of the present application, which should be covered by the protection scope of the embodiment of the present application.

## Claims

1. A temperature control method for an energy storage supercharging equipment, **characterized in that** the method is applied to a thermal management system, and the thermal management system is respectively connected to an energy storage battery, a bidirectional ACDC, a DCDC, and a liquid-cooling charging cable in the energy storage supercharging equipment; the method comprises:
determining a to-be-monitored object according to an operating state of the energy storage supercharging equipment and obtaining temperature parameters of the to-be-monitored object, wherein the to-be-monitored object comprises at least one of the energy storage battery, the bidirectional ACDC, the DCDC, and the liquid-cooling charging cable; and
according to the temperature parameters, controlling a temperature of the to-be-monitored object.

2. The method according to claim 1, wherein when the operating state is a static state, the temperature parameters of the to-be-monitored object comprise a temperature of an energy storage battery cell, and the controlling a temperature of the to-be-monitored object according to the temperature parameters comprises:
when the temperature of the energy storage battery cell is less than or equal to a preset heating start temperature, issuing a first heating control instruction to heat the energy storage battery until the temperature of the energy storage battery cell is greater than the heating start temperature, and issuing a heating stop instruction, wherein a heating temperature in the first heating control instruction is greater than the heating start temperature; and
when the temperature of the energy storage battery cell is greater than or equal to a preset cooling start temperature, issuing a first cooling control instruction to perform a cooling operation on the energy storage battery until the temperature of the energy storage battery cell is less than the cooling start temperature, and issuing a cooling stop instruction, wherein a cooling water temperature in the first cooling control instruction is less than the cooling start temperature.

3. The method according to claim 1, wherein when the operating state is a grid charging state, the temperature parameters of the to-be-monitored object comprise a temperature of an energy storage battery cell and a bidirectional ACDC temperature parameter; and the controlling a temperature of the to-be-monitored object according to the temperature parameters comprises:
when the temperature of the energy storage battery cell is less than or equal to a preset heating start temperature, issuing a second heating control instruction to heat the energy storage battery according to the bidirectional ACDC temperature parameter, wherein a heating temperature in the second heating control instruction is greater than the heating start temperature and less than a maximum operating temperature of the bidirectional ACDC; and
when the temperature of the energy storage battery cell is greater than or equal to a preset cooling start temperature, issuing a second cooling control instruction to perform cooling operations on the energy storage battery and the bidirectional ACDC until the temperature of the energy storage battery cell is less than the cooling start temperature, and issuing a cooling stop instruction, wherein a cooling water temperature in the second cooling control instruction is less than the cooling start temperature and the maximum operating temperature of the bidirectional ACDC.

4. The method according to claim 3, wherein the bidirectional ACDC temperature parameter comprises a bidirectional ACDC operating temperature; and the heating the energy storage battery according to the bidirectional ACDC temperature parameter comprises:
obtaining a heating demand of the energy storage battery cell according to the temperature of the energy storage battery cell, and obtaining heat generated by the bidirectional ACDC according to the bidirectional ACDC temperature parameter;
when the heating demand of the energy storage battery cell is greater than the heat generated by the bidirectional ACDC, and the bidirectional ACDC operating temperature is less than a preset maximum allowable temperature of the bidirectional ACDC, heating the energy storage battery using the heat generated by the bidirectional ACDC and heat of a heater until the heating demand of the energy storage battery cell is not greater than the heat generated by the bidirectional ACDC, issuing a heater stop instruction, and then heating the energy storage battery using the heat generated by the bidirectional ACDC; and
when the heating demand of the energy storage battery cell is not greater than the heat generated by the bidirectional ACDC, and the bidirectional ACDC operating temperature is less than the preset maximum allowable temperature of the bidirectional ACDC, heating the energy storage battery using the heat generated by the bidirectional ACDC until the temperature of the energy storage battery cell is greater than the heating start temperature, issuing a heating stop instruction, and performing a heat dissipation operation on the bidirectional ACDC.

5. The method according to claim 1, wherein when the operating state is a discharging state, the temperature parameters of the to-be-monitored object comprise a temperature of an energy storage battery cell, a DCDC temperature parameter, and a liquid-cooling charging cable temperature parameter, and the controlling a temperature of the to-be-monitored object according to the temperature parameters comprises:
when the temperature of the energy storage battery cell is less than or equal to a preset heating start temperature, issuing a third heating control instruction to heat the energy storage battery according to the DCDC temperature parameter and the liquid-cooling charging cable temperature parameter, wherein a heating temperature in the third heating control instruction is greater than the heating start temperature and less than a preset maximum operating temperature of the DCDC and a preset maximum operating temperature of the liquid-cooling charging cable; and
when the temperature of the energy storage battery cell is greater than or equal to a preset cooling start temperature, issuing a third cooling control instruction to perform cooling operations on the energy storage battery, the DCDC, and the liquid-cooling charging cable until the temperature of the energy storage battery cell is less than the cooling start temperature, and issuing a cooling stop instruction, wherein a cooling water temperature in the third cooling control instruction is less than the cooling start temperature, the maximum operating temperature of the DCDC, and the maximum operating temperature of the liquid-cooling charging cable.

6. The method according to claim 5, wherein the DCDC temperature parameter comprises a DCDC operating temperature; the liquid-cooling charging cable temperature parameter comprises an operating temperature of the liquid-cooling charging cable; and the heating the energy storage battery according to the DCDC temperature parameter and the liquid-cooling charging cable temperature parameter comprises:
obtaining a heating demand of the energy storage battery cell according to the temperature of the energy storage battery cell, obtaining heat generated by the DCDC according to the DCDC temperature parameter, and obtaining heat generated by the liquid-cooling charging cable according to the liquid-cooling charging cable temperature parameter;
when the heating demand of the energy storage battery cell is greater than total heat generated by the DCDC and the liquid-cooling charging cable, the DCDC operating temperature is less than a preset maximum allowable temperature of the DCDC, and the operating temperature of the liquid-cooling charging cable is less than a preset maximum allowable temperature of the liquid-cooling charging cable, heating the energy storage battery using the heat generated by the DCDC, the heat generated by the liquid-cooling charging cable, and heat of a heater until the heating demand of the energy storage battery cell is not greater than the total heat generated by the DCDC and the liquid-cooling charging cable, issuing a heater stop instruction, and heating the energy storage battery using the heat generated by the DCDC and the heat generated by the liquid-cooling charging cable; and
when the heating demand of the energy storage battery cell is not greater than the total heat generated by the DCDC and the liquid-cooling charging cable, the DCDC operating temperature is less than the maximum allowable temperature of the DCDC, and the operating temperature of the liquid-cooling charging cable is less than the maximum allowable temperature of the liquid-cooling charging cable, heating the energy storage battery using the heat generated by the DCDC and the heat generated by the liquid-cooling charging cable until the temperature of the energy storage battery cell is greater than the heating start temperature, issuing a heating stop instruction and performing heat dissipation operations on the DCDC and the liquid-cooling charging cable.

7. The method according to claim 1, when the operating state is a reverse charging state, the temperature parameters of the to-be-monitored object comprise a temperature of an energy storage battery cell, a bidirectional ACDC temperature parameter, and a liquid-cooling charging cable temperature parameter; and the controlling a temperature of the to-be-monitored object according to the temperature parameters comprises:
when the temperature of the energy storage battery cell is less than or equal to a heating start temperature, issuing a fourth heating control instruction to heat the energy storage battery according to the bidirectional ACDC temperature parameter and the liquid-cooling charging cable temperature parameter, wherein a heating temperature in the fourth heating control instruction is greater than the heating start temperature and less than a preset maximum allowable temperature of the bidirectional ACDC and a preset maximum allowable temperature of the liquid-cooling charging cable; and
when the temperature of the energy storage battery cell is greater than or equal to a cooling start temperature, issuing a fourth cooling control instruction to perform cooling operations on the energy storage battery, the bidirectional ACDC, and the liquid-cooling charging cable until the temperature of the energy storage battery cell is less than the cooling start temperature, and issuing a cooling stop instruction, wherein a cooling water temperature in the fourth cooling control instruction is less than the cooling start temperature, the maximum allowable temperature of the bidirectional ACDC, and the maximum allowable temperature of the liquid-cooling charging cable.

8. The method according to claim 7, wherein the bidirectional ACDC temperature parameter comprises a bidirectional ACDC operating temperature; the liquid-cooling charging cable temperature parameter comprises an operating temperature of the liquid-cooling charging cable; and the heating the energy storage battery according to the bidirectional ACDC temperature parameter and the liquid-cooling charging cable temperature parameter comprises:
obtaining a heating demand of the energy storage battery cell according to the temperature of the energy storage battery cell, obtaining heat generated by the bidirectional ACDC according to the bidirectional ACDC operating temperature, and obtaining heat generated by the liquid-cooling charging cable according to the liquid-cooling charging cable operating temperature;
when the heating demand of the energy storage battery cell is greater than total heat generated by the bidirectional ACDC and the liquid-cooling charging cable, the bidirectional ACDC operating temperature is less than a maximum allowable temperature of the bidirectional ACDC, and the operating temperature of the liquid-cooling charging cable is less than a maximum allowable temperature of the liquid-cooling charging cable, heating the energy storage battery using the heat generated by the bidirectional ACDC, the heat generated by the liquid-cooling charging cable, and heat of a heater until the heating demand of the energy storage battery cell is not greater than the total heat generated by the bidirectional ACDC and the liquid-cooling charging cable, issuing a heater stop instruction, and heating the energy storage battery using the heat generated by the bidirectional ACDC and the heat generated by the liquid-cooling charging cable; and
when the heating demand of the energy storage battery cell is not greater than the total heat generated by the bidirectional ACDC and the liquid-cooling charging cable, the bidirectional ACDC operating temperature is less than the maximum allowable temperature of the bidirectional ACDC, and the operating temperature of the liquid-cooling charging cable is less than the maximum allowable temperature of the liquid-cooling charging cable, heating the energy storage battery using the heat generated by the bidirectional ACDC and the heat generated by the liquid-cooling charging cable until the temperature of the energy storage battery cell is greater than the heating start temperature, issuing a heating stop instruction and performing heat dissipation operations on the bidirectional ACDC and the liquid-cooling charging cable.

9. A thermal management system (200), **characterized by** comprising a parameter determination module (210) configured to determine a to-be-monitored object according to an operating state of an energy storage supercharging equipment and obtain temperature parameters of the to-be-monitored object, wherein the to-be-monitored object comprises at least one of an energy storage battery, a bidirectional ACDC, a DCDC, and a liquid-cooling charging cable; and a control module (220) configured to control a temperature of the to-be-monitored object according to the temperature parameters.

10. A computer program product, **characterized in that** the computer program product comprises computer program instructions, and when the computer program instructions are executed by a processor (310), the computer program instructions execute the method according to any one of claims 1 to 8.

11. An electronic device, **characterized in that** the electronic device comprises a processor (310) and a memory (320), wherein the memory (320) stores computer program instructions, and when the computer program instructions are executed by the processor (310), the computer program instructions execute the method according to any one of claims 1 to 8.

12. A computer-readable storage medium, **characterized in that** the computer-readable storage medium stores computer program instructions, and when the computer program instructions are executed by a processor (310), the computer program instructions execute the method according to any one of claims 1 to 8.
